# FASCICULE DE BREVET EUROPEEN

(11) **EP 0 509 860 B1**
(45) Date de publication et mention de la délivrance du brevet: **05.06.1996**
(21) Numéro de dépôt: 92400802.2
(22) Date de dépôt: 25.03.1992
(51) Int. Cl.: B21K 25/00, B21D 39/03, A47J 36/02

(54) **Article constitué à partir d'une plaque réalisée en un métal relativement mou et récipient culinaire constituant un tel article**
Formteil hergestellt aus einer verhältnismässig weichen Metallplatte und Kochgefäss mit einem solchen Formteil
Article fabricated from a relatively soft metal plate and cooking vessel comprising such an article

(30) Priorité: 27.03.1991 FR 9103695; 26.07.1991 FR 9109500; 10.01.1992 FR 9200221
(43) Date de publication de la demande: 21.10.1992
(73) Titulaire: SEB S.A., F-69130 Ecully (FR)
(72) Inventeur: Flammang, Denis, F-74150 Rumilly (FR)
(74) Mandataire: Keib, Gérard

(56) Documents cités:
- CH-A- 227 769
- DE-C- 715 630
- DE-U- 9 111 901
- FR-A- 1 404 629
- FR-A- 2 302 174
- NL-A- 7 907 994

## Description

La présente invention concerne un procédé pour réaliser un récipient culinaire constitué à partir d'une plaque réalisée en un métal relativement mou.

L'aluminium est un métal qui présente de nombreux avantages. Il est léger, facilement emboutissable et matriçable, et conduit bien la chaleur. De plus, il est relativement économique. Du fait de ces qualités, il est universellement utilisé dans l'industrie, notamment pour réaliser des récipients culinaires.

Il présente cependant des défauts. Tout d'abord, il est relativement mou, de sorte que sa surface se raye facilement. Dans les applications ménagères, l'aluminium est souvent revêtu d'une couche anti-adhésive telle que du polytétrafluoréthylène ou d'une couche d'émail. Toutefois, la durée de vie de ces revêtements est limitée du fait que l'aluminium soit un support trop mou.

Par ailleurs, les articles en aluminium et en particulier les récipients de cuisson ont tendance à se déformer facilement sous l'effet de la chaleur engendrée par exemple par une plaque électrique de cuisson ou un brûleur à gaz.

Pour remédier à cette difficulté, on peut soit augmenter l'épaisseur du métal, soit appliquer sur la paroi en aluminium, par exemple par frappe à chaud, une feuille en acier inoxydable. Toutefois, dans ce cas, on augmente sensiblement le coût de fabrication et on réduit la conductibilité thermique ce qui allonge les temps de cuisson.

Par ailleurs, les ustensiles en aluminium ne peuvent pas être chauffés par induction, car ce mode de chauffage nécessite l'utilisation de récipients en métal magnétique tel que l'acier inoxydable ferritique.

On connaît d'autre part un procédé de réalisation d'un récipient culinaire, décrit dans la demande FR 2 302 174, dans lequel on applique par frappe à froid, sur le fond du récipient déjà embouti, une plaque de métal relativement mou.

La présente invention a pour but de proposer un procédé de mise en oeuvre différente de celle des procédés de l'art antérieur et qui permette de modifier d'une manière économique les caractéristiques de la surface d'un métal d'un récipient culinaire pour améliorer ses propriétés ou pour rendre ce métal apte à son utilisation dans des applications spécifiques.

Le procédé suivant l'invention pour réaliser un récipient culinaire comportant un fond et une paroi latérale, est caractérisé par les étapes suivantes :
a) on pose sur une plaque plane en métal relativement mou, une plaque comportant des trous en un métal plus dur que celui de la plaque ci-dessus et ayant une surface correspondant sensiblement à celle du fond du récipient,
b) on fixe ladite plaque comportant des trous sur ladite plaque plane par frappe à froid pour encastrer au moins en partie ladite plaque à trous dans ladite plaque plane,
c) on emboutit l'ensemble constitué par les plaques fixées l'une à l'autre, de façon à obtenir ledit récipient.

Par frappe à froid on entend une opération qui consiste à frapper par exemple avec un marteau-pilon ou presser fortement par exemple au moyen d'une surface ou d'un rouleau sur la plaque à trous pour l'encastrer au moins partiellement dans la surface du métal.

La plaque à trous peut être une feuille perforée présentant des trous circulaires, carrés ou d'autres formes ou une trame métallique composée de fils se croisant mutuellement.

On obtient ainsi un récipient culinaire dont le fond est une surface composite présentant des propriétés résultant de celles des deux métaux, c'est-à-dire du métal de base et de celui formant la plaque à trous. Autrement dit, les propriétés du métal de base ont été modifiées par la plaque à trous qui est intimement liée à ce métal de base.

Par exemple, si la plaque à trous est en métal plus dur que celui du métal de base, la présence de la plaque à trous aura pour effet de durcir la surface du métal de base.

Par ailleurs, l'utilisation d'une plaque à trous en métal dur en association avec un métal de base mou, est bien adaptée à la mise en oeuvre du procédé selon l'invention car lors de l'étape b, la plaque à trous dure qui présente une surface de contact faible pénètre profondément dans le métal de base mou, ce qui assure une excellente liaison entre cette plaque à trous et le métal de base.

D'autre part, si le métal de base à tendance à se déformer sous l'effet de la chaleur, la présence de la plaque à trous (si celle-ci est en métal se dilatant moins à la chaleur) rendra ce métal nettement moins déformable.

Dans une autre application, si le métal de base n'est pas magnétique (cas de l'aluminium par exemple), la présence d'une plaque à trous en métal magnétique ancrée à la surface du métal, rendra celui-ci apte au chauffage par induction.

Dans tous les cas, l'apport d'un second métal sous forme de plaque à trous, sur un métal de base donné, ne grève pas le coût et permet de maintenir intactes les propriétés du métal de base.

En effet, l'emboutissage de la plaque composite obtenue par frappe à froid permet ensuite d'obtenir des récipients culinaires divers tels que des poëles, casseroles, moules à gâteau.

Suivant une autre version de l'invention, le procédé comprend les étapes suivantes :
a) on superpose une première plaque comportant des trous, une plaque plane en métal relativement mou et une seconde plaque comportant des trous, lesdites plaques comportant des trous étant en un métal plus dur que celui de ladite plaque plane et ayant une surface correspondant sensiblement à celle du fond du récipient;
b) on fixe lesdites plaques comportant des trous sur ladite plaque plane par frappe à froid pour encastrer au moins en partie lesdites plaques comportant des trous dans la plaque plane; et
c) on emboutit l'ensemble constitué par les plaques fixées les unes aux autres de façon à obtenir ledit récipient.

Le fond du récipient culinaire présente ainsi sur chacune de ses deux faces un élément métallique.

Suivant une version avantageuse de l'invention, on recouvre la surface opposée à la plaque plane de la plaque comportant des trous ou d'au moins une de ces plaques, par un revêtement en métal identique au métal de la plaque plane.

Suivant encore une autre version de l'invention, on recouvre chaque surface de la plaque plane sur laquelle est fixée une plaque comportant des trous par une couche continue d'émail ou d'une résine fluorocarbonée.

Suivant une autre version de l'invention, on pose en outre à l'étape a), sur au moins une des plaques comportant des trous, une seconde plaque plane en métal relativement mou et on fixe à l'étape b) la plaque comportant des trous par frappe à froid pour l'encastrer en partie dans le métal de l'une des plaques et dans le métal de l'autre plaque.

Le fond du récipient culinaire ainsi réalisé comprend ainsi deux plaques métalliques fixées l'une contre l'autre et pourvues à leur interface d'un élément métallique qui est encastré en partie dans le métal de l'une des plaques et dans le métal de l'autre plaque.

L'invention permet ainsi de renforcer les fonds en aluminium des récipients culinaires, d'augmenter la durée de vie de leur revêtement anti-adhésif et de les rendre aptes au chauffage par induction, si la plaque à trous rapportée est en métal magnétique, tel que l'acier inoxydable ferritique.

D'autres particularités et avantages de l'invention apparaîtront encore dans la description ci-après.

Aux dessins annexés, donnés à titre d'exemples non limitatifs.
- la figure 1 est une vue en perspective d'un disque métallique sur lequel est appliquée une plaque à trous d'un métal différent de celui du disque;
- la figure 2 est une vue en coupe schématisant le procédé de matriçage de la plaque à trous sur le disque;
- la figure 3 est une vue à plus grande échelle du détail A de la figure 2;
- la figure 4 est une vue analogue à la figure 3, montrant la plaque à trous encastrée dans le métal du disque, après matriçage;
- la figure 5 est une vue partielle en plan, à échelle agrandie, montrant la plaque à trous fixée sur la surface du métal ;
- la figure 6 est une vue en coupe suivant le plan VI-VI de la figure 5 ;
- la figure 7 est une vue en coupe d'une plaque comportant sur ses deux faces une feuille perforée encastrée dans le métal de la plaque;
- la figure 8 est une vue en coupe de la paroi d'un article dans lequel la surface de ladite feuille ou grille opposée à la plaque est recouverte par un revêtement en métal identique audit premier métal;
- la figure 9 est une vue semblable à la figure 8 d'une variante de réalisation de l'invention selon ladite figure 8;
- la figure 10 est une vue en coupe montrant deux plaques et trois feuilles perforées avant leur assemblage par matriçage;
- la figure 11 est une vue en coupe de la plaque composite ainsi obtenue après matriçage;
- la figure 12 est une vue partielle en plan d'une feuille perforée;
- la figure 13 est une vue partielle en coupe d'une plaque portant une feuille perforée partiellement encastrée dans cette plaque;
- la figure 14 est une vue en coupe d'une plaque composite dans laquelle sont noyées deux feuilles perforées;
- la figure 15 est une vue en plan partielle d'un élément métallique sous forme de tôle déployée;
- la figure 16 est une vue en coupe d'un récipient culinaire portant une grille sur la face extérieur de son fond;
- la figure 17 est une vue à plus grande échelle du détail B de la figure 16;
- la figure 18 est une vue en coupe d'un récipient culinaire portant une grille sur la face intérieure de son fond ;
- la figure 19 est une vue à plus grande échelle du détail C de la figure 18.

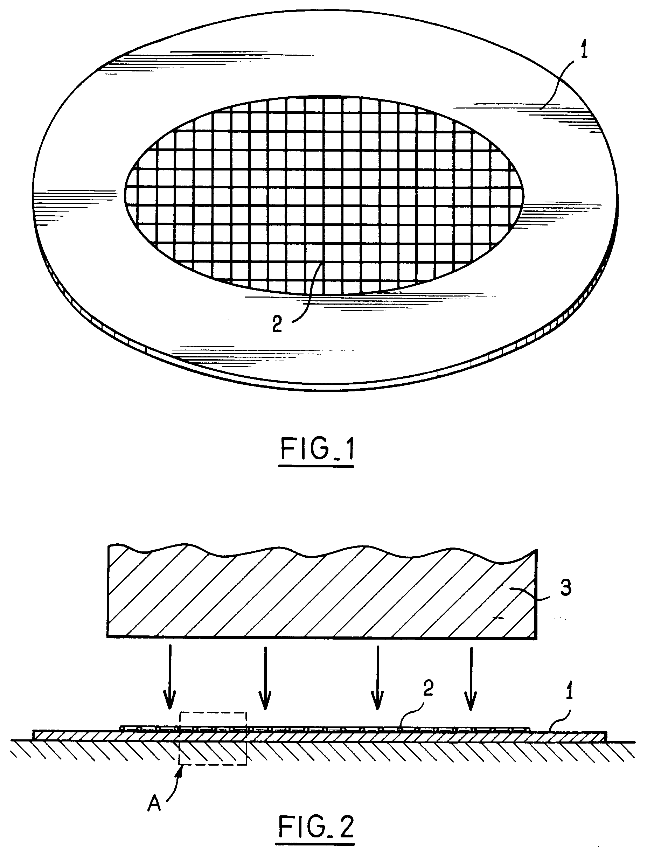

L'article de la figure 1 est constitué à partir d'une plaque réalisée en un premier métal relativement mou.

On applique (voir figures 1 et 2) sur la surface 1 dudit métal, sous forme de disque, une grille 2 d'un autre métal, et on fixe cette grille 2 sur ladite surface 1 par matriçage pour l'encastrer au moins partiellement dans cette dernière.

La grille 2 est de préférence en un métal plus dur que celui de ladite surface 1.

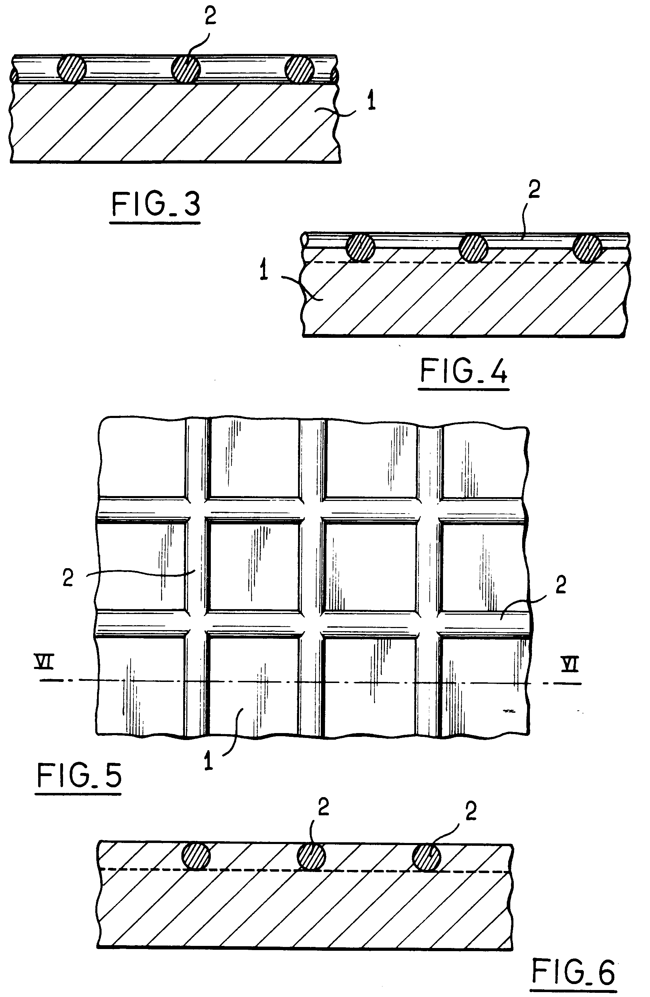

La figure 3 montre, à grande échelle, la phase initiale d'application de la grille 2 sur le disque 1.

Sous l'effet de la force appliquée par le marteau 3 (voir figure 2) sur la grille 2, celle-ci s'enfonce dans le métal du disque 1, comme indiqué sur la figure 4.

La profondeur d'enfoncement dépend de la force d'application de la grille 2 sur le disque 1, des duretés relatives des métaux de la grille 2 et du disque 1 et du diamètre du fil avec lequel la grille 2 a été réalisée.

Dans le cas de la figure 4, la grille 2 est enfoncée dans le métal du disque 1, sur une profondeur correspondant sensiblement à la moitié du diamètre du fil de la grille 2.

En mettant en oeuvre une force de matriçage plus importante, il est possible d'encastrer la grille 2 entièrement dans le disque 1, comme indiqué sur la figure 6.

Le métal préféré du disque de métal relativement mou 1 est de l'aluminium.

Le métal peut toutefois également être du cuivre, de l'étain, du plomb, ou un alliage d'un ou plusieurs de ces métaux, ou tout autre métal ou alésage.

La grille 2 peut être en métal ou acier ferreux ayant des propriétés magnétiques.

Dans ce cas, non seulement la grille 2 encastrée dans la surface du disque 1 renforce et durcit celle-ci, mais en outre, rend celle-ci apte au chauffage par induction.

Cette grille 2 peut ainsi être en acier inoxydable.

Dans le cas d'un disque 1 en aluminium et d'une grille 2 en acier inoxydable composée de fil de diamètre compris entre quelques dixièmes de mm et un mm, la force mise en oeuvre lors du matriçage doit être égale à au moins 10 tonnes par cm² environ.

La grille 2 peut présenter toute sorte de mailles, carrées, rectangulaires, hexagonales ou autres.

La grille 2 au lieu d'être réalisée par des fils, peut être constituée par une feuille de métal découpée ou en métal déployé.

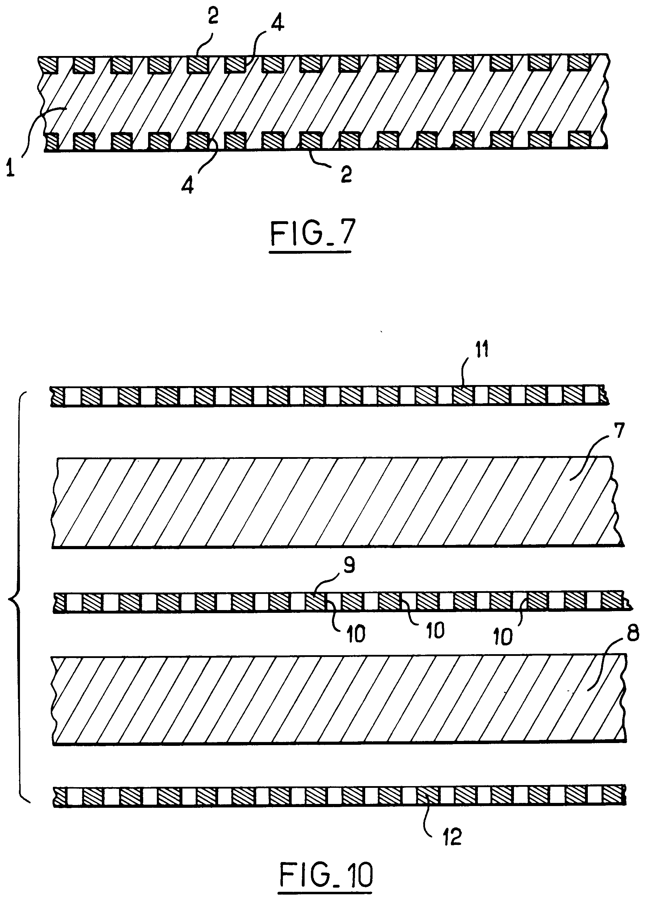

Dans la réalisation de la figure 7, la plaque métallique 1 comprend sur ses deux faces, un élément métallique 2 sous forme de feuille pourvue d'ouvertures 4. Ces deux éléments 2 sont complètement encastrés par matriçage dans le métal de la plaque 1. En effet, le métal de la plaque 1 remplit complètement les ouvertures 4 des feuilles 2.

Bien entendu, l'épaisseur des feuilles 2 est faible par rapport à celle de la plaque 1. L'opération de matriçage implique l'application sur la superposition feuille 2-plaque 1-feuille 2 d'une pression suffisante pour que les deux feuilles 2 puissent pénétrer dans le métal de la plaque 1 et que le métal de celle-ci puisse fluer dans les ouvertures 4 des feuilles.

Les deux éléments ou feuilles métalliques 2 peuvent être réalisées dans des métaux ou alliages identiques. La plaque 1 peut par exemple être en métal mou tel que l'aluminium ou le cuivre et les feuilles en métal plus dur tel que l'acier.

Dans ce cas, on obtient une plaque composite présentant deux faces dures, résistant à l'abrasion et aux chocs mécaniques. De plus, la plaque composite présente une résistance nettement améliorée aux déformations dues à des contraintes mécaniques ou thermiques, tout en gardant l'essentiel des propriété de l'aluminium (légèreté et bonne conductibilité thermique).

Les deux éléments ou feuilles métalliques 2 peuvent cependant être réalisés dans des métaux ou alliages différents.

Dans ce cas la plaque composite présentera des faces ayant des propriétés mécaniques ou thermiques différentes, ce qui peut être avantageux dans certaines applications. Dans ce cas également, la plaque composite gardera pour l'essentiel les avantages apportés par le métal de base de la plaque.

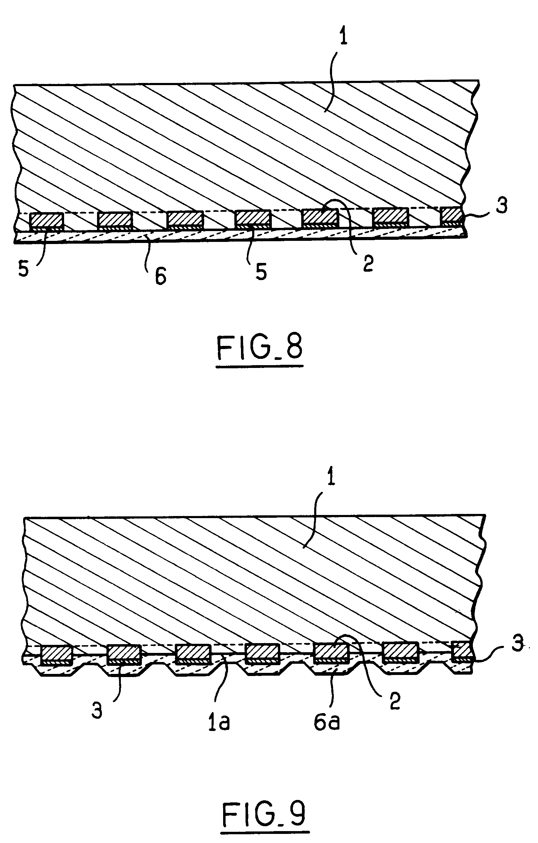

Dans la réalisation de la figure 8, on a représenté en coupe partielle la paroi d'un article tel qu'un récipient de cuisson comprenant une plaque 1 réalisée en un premier métal sur laquelle est fixée par matriçage ou frappe à froid une feuille ajourée 2 ou grille réalisée en un second métal différent du premier métal.

Conformément à la présente invention, la surface de ladite feuille ajourée 2 opposée à la plaque 1 est recouverte par un revêtement 5 en métal identique audit premier métal.

Ainsi, dans le cas d'un récipient de cuisson, la plaque 1 est en aluminium et la feuille ajourée 2 est en tôle d'acier recouverte d'une couche d'aluminium 5. De ce fait, la surface de la plaque 1 sur laquelle est fixée ladite feuille ajourée 2, ainsi que celle de cette feuille 2 peuvent être recouvertes par une couche continue d'émail 6 comme indiqué sur la figure 8.

Dans l'exemple de la figure 8, la surface de la plaque 1 et la surface de la feuille ajourée 2, recouvertes par la couche d'émail 6 sont situées dans le prolongement l'une de l'autre.

Ainsi, la couche d'émail 6 masque totalement la tôle d'acier ajourée 2. Grâce à la couche d'aluminium 5 qui recouvre la surface de la tôle 2, l'émail 6 adhère aussi bien à cette tôle qu'à l'aluminium de la plaque 1.

Cette couche d'émail 6 d'autre part protège la tôle d'acier à l'égard notamment de la rouille, et facilite le nettoyage de la surface de l'aluminium.

La tôle d'acier ajourée 2 peut être adjacente à la surface extérieure ou intérieure du fond d'un récipient de cuisson.

Grâce à la présence de cette feuille ajourée en acier ou autre métal ferreux, le récipient de cuisson peut être utilisé dans une plaque à induction, tout en ayant tous les avantages propres aux récipients en aluminium.

Dans le cas de l'exemple représenté sur la figure 9, la surface de la feuille ajourée en acier 2 fait saillie relativement à la surface 1a de la plaque en aluminium 1.

Dans ce cas, le revêtement en émail 6 présente au droit des parties en saillie de la feuille ajourée 2, des reliefs séparés par des creux.

Les reliefs de la couche d'émail 6a permettent de localiser l'usure de la couche d'émail en des zones discrètes, de sorte que les parties en creux de l'émail conservent leur brillant d'origine.

La couche d'émail 6 peut bien entendu être remplacée par une couche de résine fluorocarbonée telle que du polytétrafluoréthylène (PTFE).

L'accrochage du PTFE à l'aluminium est réalisé grâce à une attaque acide préalable qui a pour effet de créer sur la surface en aluminium des cavités d'accrochage.

Du fait que la tôle ajourée 2 soit recouverte d'une couche d'aluminium, ces cavités d'accrochage sont également créées sur la tôle ajourée 2, ce qui permet au revêtement de PTFE d'adhérer aussi bien sur l'aluminium de la plaque 1 que sur la tôle ajourée 2.

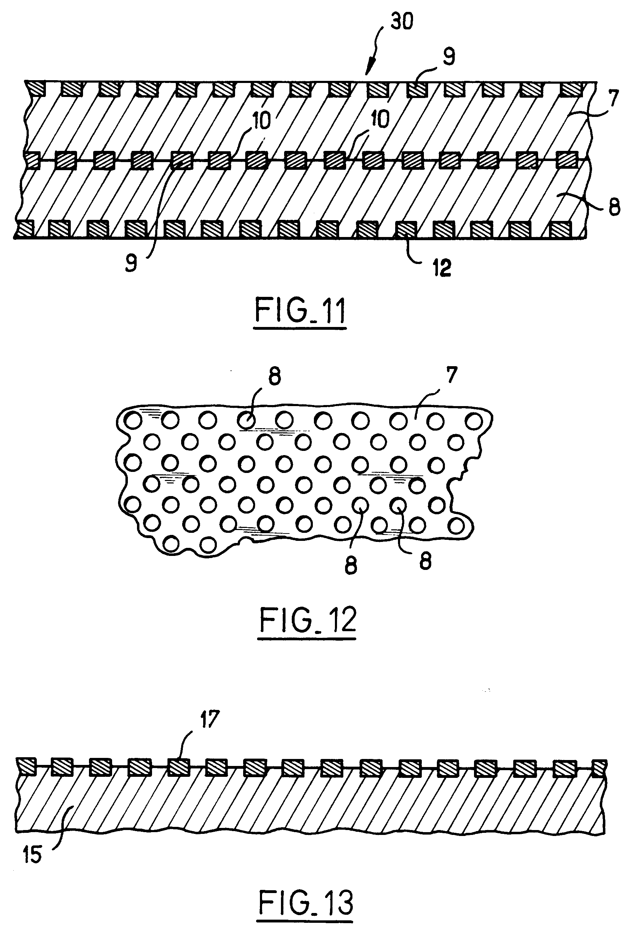

Dans le cas de la réalisation selon les figures 10 et 11, la plaque composite 30 comprend deux plaques métalliques 7, 8 fixées l'une contre l'autre et pourvues à leur interface d'un élément ou feuille métallique 9 à ouvertures 10 qui est encastré en partie dans le métal de l'une 7 des plaques et dans le métal de l'autre plaque 8.

Les deux plaques métalliques 7, 8 peuvent être réalisées dans des métaux ou alliages identiques ou différents.

Le fluage du métal des deux plaques 7, 8 dans les ouvertures 10 de la feuille métallique 9 permet d'obtenir une excellente liaison entre les deux plaques 7, 8. Dans l'exemple des figures 10 et 11, les deux plaques métalliques 7, 8 portent sur leur face extérieure un élément métallique 11, 12 répondant à la définition ci-dessus.

Dans cet exemple, la plaque composite 30 réalisée à partir de deux plaques 7,8 par exemple en aluminium, est armée par trois couches 9, 11, 12 d'un métal ayant une plus grande dureté et résistance mécanique que l'aluminium qui permettent ainsi d'augmenter considérablement les propriétés mécaniques de la plaque.

De plus, la présence des feuilles perforées 9, 11, 12 a du fait de leur faible épaisseur une incidence très faible sur la densité qui reste ainsi voisine de celle de l'aluminium.

Bien entendu, la feuille perforée 9 peut être de nature différente de celle des deux autres feuilles 11, 12, suivant les propriétés recherchées.

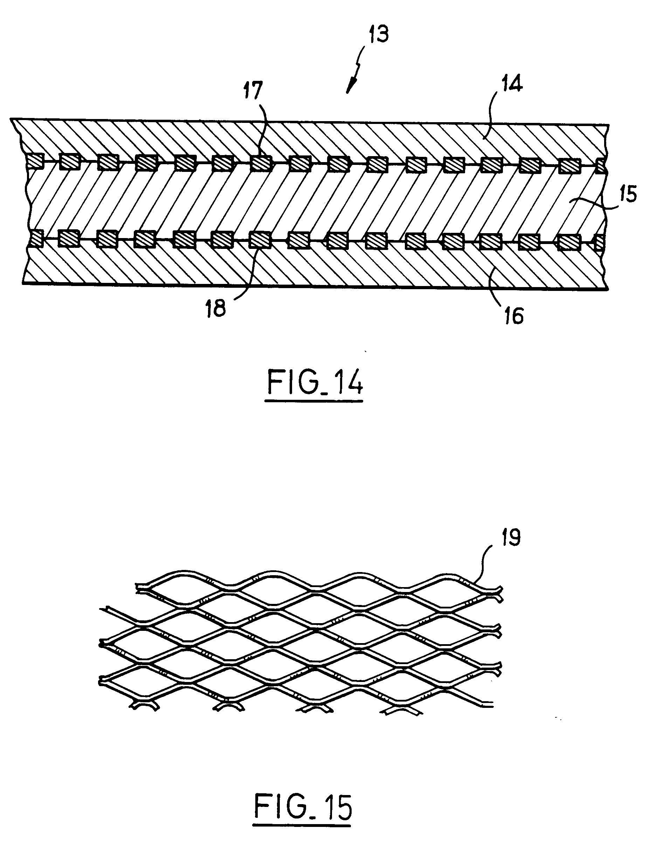

Dans la réalisation de la figure 14, la plaque composite 13 comprend trois plaques métalliques 14, 15, 16, fixées l'une contre l'autre et pourvues à chacune de leurs interfaces d'un élément ou feuille métallique 17, 18, répondant à la définition précitée.

Dans cette réalisation, les feuilles métalliques perforées 17, 18 présentent les deux fonctions suivantes :
- tout d'abord elles permettent d'assurer la liaison entre la plaque 15 et les plaques 14, 16 grâce au fluage de métal des plaques dans les ouvertures des feuilles 17, 18;
- d'autre part, ces feuilles 17, 18 permettent de renforcer ou d'armer la plaque composite 13 pour donner à celle-ci une meilleure résistance aux contraintes mécaniques.

Les trois plaques 14, 15, 16 peuvent être réalisées dans le même métal, tel que l'aluminium. Elles peuvent toutefois être en des métaux différents, suivant les applications envisagées. Ainsi, les deux plaques extérieures 14, 16 pourraient être en cuivre et la plaque intérieure 15 en aluminium.

Ainsi la plaque intérieure 15 est habillée extérieurement par deux couches de cuivre permettant d'améliorer la conductibilité thermique.

La figure 15 montre une feuille 19 en métal déployé qui peut remplacer les feuilles perforées décrites ci-dessus.

Les plaques composites que l'on vient de décrire sont ensuite conformément à l'invention embouties sous la forme de récipients de cuisson dont les fonds présentent une plus grande résistance à l'abrasion ou aux déformations dues à des contraintes thermiques ou mécaniques.

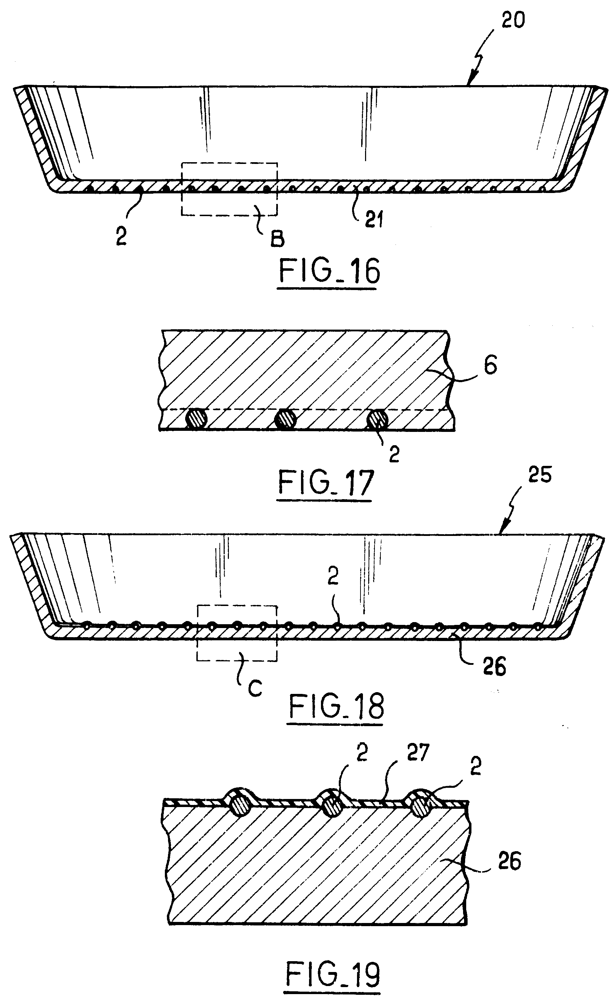

La figure 16 représente un récipient culinaire, tel que poêle, casserole, moule à gâteau réalisé à partir d'une feuille d'aluminium d'épaisseur comprise entre 1 et 3 mm.

Sur la face extérieure du fond 21 du récipient 20 a été encastrée par matriçage une grille 2 en acier inoxydable ferritique qui est entièrement enfoncée dans le métal, comme indiqué sur la figure 17.

La grille 2 encastrée dans le fond du récipient 20 confère à celui-ci les avantages techniques suivants :
a) durcissement du fond du récipient, qui permet à celui-ci de mieux résister à l'usure;
b) amélioration de la résistance du fond aux déformations engendrées par les variations de température; de ce fait le fond reste plan et le transfert thermique avec une plaque de cuisson reste optimal,
c) le récipient peut être chauffé par induction, grâce à la présence de l'acier inoxydable magnétique,
d) du fait que l'aluminium est une excellent conducteur de la chaleur, la chaleur emmagasinée par l'acier inoxydable de la grille, diffuse bien et uniformément au travers du fond 21 en aluminium,
e) du fait que la grille en acier inoxydable est discontinue, il est possible de régler à une valeur réduite la diffusion de la chaleur au travers du fond du récipient et par conséquent d'éviter un échauffement brutal et excessif des aliments,
f) la présence de la grille n'affecte que faiblement le coût de la fabrication et ne gêne en rien l'emboutissage des récipients en aluminium.

Par conséquent, le récipient de cuisson ci-dessus présente tous les avantages dus à l'utilisation de l'aluminium, tout en ayant les avantages apportés par la grille en acier inoxydable.

Si la possibilité de chauffage par induction n'est pas recherchée, la grille peut être en acier ordinaire, ou tout autre métal plus dur que l'aluminium.

A la figure 18, on a représenté un autre récipient culinaire 25 en aluminium, dont le fond 26 présente sur sa face intérieure un grille 2 par exemple en acier inoxydable ou autre acier relativement dur.

On voit sur la figure 19, que cette grille 2 n'est que partiellement encastrée dans le métal du fond 26 de sorte qu'elle fait saillie de la surface intérieure de ce fond 26.

Dans cet exemple, un revêtement anti-adhésif 27, par exemple en polytétrafluoréthylène, recouvre la surface intérieure du fond 26 ainsi que la grille 2. Du fait que cette dernière fait saillie par rapport à la surface, le revêtement 27 forme au droit des fils de la grille un relief.

Les avantages techniques apportés par cette réalisation sont les suivants:
La présence de la grille 2 en saillie sur la surface du fond 26 du récipient engendre un durcissement de cette surface qui permet au revêtement anti-adhésif de mieux résister à l'action des outils coupants.

En effet, l'outil coupant n'atteint pas la surface molle en aluminium, car la grille en acier inoxydable fait saillie sur celle-ci. par conséquent, l'outil coupant n'affecte que les parties en saillie de la grille, de sorte que seule la partie du revêtement qui recouvre la grille peut subir quelques dégradations. Ces dégradations resteront cependant pratiquement invisibles puisqu'elles seront localisées en des zones très réduites.

Par ailleurs, le fait que grâce à la grille 2, le revêtement anti-adhésif forme sur la surface intérieure du récipient un relief régulier, permet de limiter la surface de contact des aliments avec la surface du récipient, ce qui limite encore davantage l'accrochage de ces aliments sur cette surface.

Pour que les avantages ci-dessus soit pleinement réalisés, il y a avantage à ce que la distance comprise entre deux fils voisins de la grille ne dépasse pas quelques mm.

Cette grille peut être constituée par des fils soudés ou tissés de façon à former des mailles de forme quelconque. Par ailleurs, les fils de la grille au lieu d'être de section circulaire peuvent être de section carrée ou autre.

De même, dans les réalisations représentées, la grille composée de fils de section circulaire peur être remplacée par une feuille par exemple en aluminium perforée de trous circulaires par exemple de diamètre égal à 0,75 mm espacés d'environ 1,5 mm.

Bien entendu, l'invention n'est pas limitée aux exemples de réalisation que l'on vient de décrire et on peut apporter à ceux-ci de nombreuses modifications sans sortir du cadre de l'invention.

En particulier, les différents modes de réalisation des articles que l'on vient de décrire peuvent faire l'objet de multiples combinaisons entre eux ou avec d'autres procédés figurant dans l'état de la technique afin d'améliorer encore les caractéristiques des articles et notamment des récipients culinaires ainsi obtenues sans sortir du domaine de l'invention.

On pourra entre autres, utiliser des éléments métalliques, feuilles ou grilles, de formes très variées, et encastrer par frappe à froid un desdits éléments sur la surface d'une de ces plaques ou entre au moins deux plaques métalliques afin qu'il constitue leur(s) interface(s). En intercalant des éléments métalliques entre les plaques, on forme ainsi des plaques composites comportant un nombre variable de couches.

Sur au moins l'une des faces d'une plaque simple ou composite, on peut encastrer une grille ou une feuille pourvue ou non sur sa face extérieure d'un revêtement en métal identique au métal constituant la surface de ladite plaque, puis éventuellement appliquer sur cette face un revêtement d'émail ou d'une résine fluorocarbonée.

## Revendications

1. Procédé pour réaliser un récipient culinaire (20, 25) comportant un fond (21, 26) et une paroi latérale, caractérisé par les étapes suivantes:
a) on pose sur une plaque plane (1) en métal relativement mou, une plaque comportant des trous (2) en un métal plus dur que celui de la plaque (1) ci-dessus et ayant une surface correspondant sensiblement à celle du fond du récipient,
b) on fixe ladite plaque comportant des trous (2) sur ladite plaque plane (1) par frappe à froid pour encastrer au moins en partie ladite plaque à trous dans ladite plaque plane,
c) on emboutit l'ensemble constitué par les plaques fixées l'une à l'autre, de façon à obtenir ledit récipient (20, 25).

2. Procédé conforme à la revendication 1, caractérisé en ce qu'à l'étape c) d'emboutissage, ladite plaque comportant des trous (2) est fixée sur la surface extérieure du fond (21) du récipient culinaire (20).

3. Procédé conforme à la revendication 1, caractérisé en ce qu'à l'étape c) d'emboutissage, ladite plaque comportant des trous (2) est fixée sur la surface intérieure du fond (26) du récipient culinaire (25).

4. Procédé pour réaliser un récipient culinaire comportant un fond et une paroi latérale, caractérisé par les étapes suivantes :
a) on superpose une première plaque comportant des trous (2, 12, 18), une plaque plane (1, 8, 15) en métal relativement mou et une seconde plaque comportant des trous (2, 9, 17), lesdites plaques comportant des trous étant en un métal plus dur que celui de ladite plaque plane (1, 8, 15) et ayant une surface correspondant sensiblement à celle du fond du récipient;
b) on fixe lesdites plaques comportant des trous sur ladite plaque plane par frappe à froid pour encastrer au moins en partie lesdites plaques à trous dans la plaque plane; et
c) on emboutit l'ensemble constitué par les plaques fixées les unes aux autres de façon à obtenir ledit récipient.

5. Procédé conforme à l'une des revendications 1 à 4, caractérisé en ce qu'on recouvre la surface opposée à ladite plaque plane (1) de ladite plaque comportant des trous (2) ou d'au moins une desdites plaques comportant des trous (2), par un revêtement en métal (5) identique au métal de ladite plaque plane (1).

6. Procédé conforme à la revendication 5, caractérisé en ce qu'on recouvre chaque surface de la plaque (1) sur laquelle est fixée une plaque comportant des trous (2) par une couche (6) continue d'émail ou d'une résine fluorocarbonée.

7. Procédé conforme à l'une des revendications 1 à 4, caractérisé en ce qu'à l'étape a), on pose en outre sur au moins une des plaques comportant des trous (9, 17, 18) une seconde plaque plane (7, 14, 16) en métal relativement mou et on fixe à l'étape b) ladite plaque comportant des trous pour frappe à froid pour l'encastrer en partie dans le métal de l'une (7, 14, 16) des plaques et dans le métal de l'autre plaque (8, 15).

8. Procédé conforme à la revendication 7, caractérisé en ce qu'à l'étape a) on pose en outre sur la face extérieure de l'une au moins des deux plaques planes (7, 8) une plaque comportant des trous (11, 12).

9. Procédé conforme à l'une des revendications 1 à 8, caractérisé en ce que la ou les plaques planes (1, 7, 8) sont en aluminium et la ou les plaques comportant des trous (2, 11, 12) sont en acier.

10. Procédé conforme à l'une des revendications 1 à 9, caractérisé en ce que la ou les plaque comportant des trous sont en acier inoxydable ferritique.

## Claims

1. A method of making a cooking vessel (20, 25) comprising a base (21, 26) and a side wall,
characterised by the following steps:
a) there is placed on a flat plate (1) of relatively soft metal an apertured plate (2) made of a harder metal than that of the plate (1) thereabove and having a surface corresponding substantially to that of the base of the vessel,
b) the said apertured plate (2) is fixed on the flat plate (1) by cold stamping in order at least partially to embed the apertured plate in the said flat plate,
c) the assembly comprising the plates fixed to one another is pressed to form the said vessel (20, 25).

2. A method according to claim 1, characterised in that in the pressing step c) the said apertured plate (2) is fired on the outer surface of the base (21) of the cooking vessel (20).

3. A method according to claim 1, characterised in that in the pressing step c) the said apertured plate (2) is fixed on the inner surface of the base (26) of the cooking vessel (25).

4. A method of making a cooking vessel comprising a base and a side wall, characterised by the following steps:
a) there is superimposed on a first apertured plate (2, 12, 18) a flat plate (1, 8, 15) of a relatively soft metal and a second apertured plate (2, 9, 17), the said apertured plates being of a harder metal than that of the said flat plate (1, 8, 15) and having a surface corresponding substantially to that of the base of the vessel;
b) the said apertured plates are fixed on the said flat plate by cold stamping in order at least partially to embed the said apertured plates in the flat plate; and
c) the assembly comprising the plates fixed to one another is pressed to form the said vessel.

5. A method according to any one of claims 1 to 4, characterised in that that surface of the said apertured plate (2) or of at least one of said apertured plates (2) which is remote from the said flat plate (1) is covered by a metal covering (5) identical to the metal of the said flat plate (1).

6. A method according to claim 5, characterised in that each surface of the plate (1) to which an apertured plate (2) is fixed is covered by a continuous layer (6) of enamel or a fluorocarbon resin.

7. A method according to any one of claims 1 to 4, characterised in that in step a) there is also placed on at least one of said apertured plates (9, 17, 18) a second flat plate (7, 14, 16) of relatively soft metal and in step b) the said apertured plate is fixed by cold stamping in order partially to embed it in the metal of one of the plates (7, 14, 16) and in the metal of the other plate (8, 15).

8. A method according to claim 7, characterised in that in step a) an apertured plate (11, 12) is also placed on the outer surface of at least one of the two flat plates (7, 8).

9. A method according to any one of claims 1 to 8, characterised in that the or each flat plate (1, 7, 8) is of aluminium and the apertured plate or plates (2, 11, 12) are of steel.

10. A method according to any one of claims 1 to 9, characterised in that the apertured plate or plates are of stainless ferritic steel.

## Patentansprüche

1. Verfahren zum Herstellen eines Kochgefäßes (20, 25) mit einem Boden (21, 26) und einer Seitenwand, gekennzeichnet durch die folgenden Schritte:
a) auf eine flache Platte (1) aus einem relativ weichen Metall wird eine mit Löchern versehene Platte (2) gelegt, die aus einem härteren Metall als die obige Platte (1) besteht und eine Fläche aufweist, die im wesentlichen derjenigen des Bodens des Gefäßes entspricht,
b) die mit Löchern versehene Platte (2) wird an der flachen Platte (1) durch Schlagen im kalten Zustand befestigt, um die Platte mit Löchern wenigstens teilweise in die flache Platte einzulassen,
c) die durch die aneinander befestigten Platten gebildete Gruppe wird tiefgezogen, um das Gefäß (20, 25) zu erhalten.

2. Verfahren nach Anspruch 1, dadurch gekennzeichnet, daß beim Schritt c) des Tiefziehens die mit Löchern versehene Platte (2) an der Außenfläche des Bodens (21) des Kochgefäßes (20) befestigt ist.

3. Verfahren nach Anspruch 1, dadurch gekennzeichnet, daß beim Schritt c) des Tiefziehens die mit Löchern versehene Platte (2) an der Innenfläche des Bodens (26) des Kochgefäßes (25) befestigt ist.

4. Verfahren zum Herstellen eines Kochgefäßes mit einem Boden und einer Seitenwand, gekennzeichnet durch die folgenden Schritte:
a) eine mit Löchern versehene erste Platte (2, 12, 18), eine flache Platte (1, 8, 15) aus einem relativ weichen Metall und eine mit Löchern versehene zweite Platte (2, 9, 17) werden übereinandergelegt, wobei die mit Löchern versehenen Platten aus einem härteren Metall als die flache Platte (1, 8, 15) bestehen und eine Fläche aufweisen, die im wesentlichen derjenigen des Bodens des Gefäßes entspricht;
b) die mit Löchern versehenen Platten werden an der flachen Platte durch Schlagen im kalten Zustand befestigt, um die Platten mit Löchern wenigstens teilweise in die flache Platte einzulassen; und
c) die durch die aneinander befestigten Platten gebildete Gruppe wird tiefgezogen, um das Gefäß zu erhalten.

5. Verfahren nach einem der Ansprüche 1 bis 4, dadurch gekennzeichnet, daß die zu der flachen Platte (1) entgegengesetzte Fläche der mit Löchern versehenen Platte (2) oder von wenigstens einer der mit Löchern versehenen Platten (2) mit einer Beschichtung (5) aus einem Metall überzogen wird, das mit dem Metall der flachen Platte (1) identisch ist.

6. Verfahren nach Anspruch 5, dadurch gekennzeichnet, daß jede Fläche der Platte (1), an der eine mit Löchern versehene Platte (2) befestigt ist, mit einer durchgehenden Schicht (6) aus Email oder einem Fluorkohlenstoffharz überzogen wird.

7. Verfahren nach einem der Ansprüche 1 bis 4, dadurch gekennzeichnet, daß beim Schritt a) außerdem auf wenigstens eine der mit Löchern versehenen Platten (9, 17, 18) eine zweite flache Platte (7, 14, 16) aus einem relativ weichen Metall gelegt wird und beim Schritt b) die mit Löchern versehene Platte durch Schlagen im kalten Zustand befestigt wird, um sie teilweise im Metall von einer der Platten (7, 14, 16) und im Metall der anderen Platte (8, 15) einzulassen.

8. Verfahren nach Anspruch 7, dadurch gekennzeichnet, daß beim Schritt a) außerdem auf die Außenfläche von wenigstens einer der beiden flachen Platten (7, 8) eine mit Löchern versehene Platte (11, 12) gelegt wird.

9. Verfahren nach einem der Ansprüche 1 bis 8, dadurch gekennzeichnet, daß die flache Platte oder die flachen Platten (1, 7, 8) aus Aluminium und die mit Löchern versehene Platte oder versehenen Platten (2, 11, 12) aus Stahl bestehen.

10. Verfahren nach einem der Ansprüche 1 bis 9, dadurch gekennzeichnet, daß die mit Löchern versehene Platte oder versehenen Platten aus nichtrostendem ferritischem Stahl sind.
